# EUROPÄISCHE PATENTANMELDUNG

(11) **EP 1 174 366 A1**
(43) Veröffentlichungstag der Anmeldung: **23.01.2002**
(21) Anmeldenummer: 01116985.1
(22) Anmeldetag: 12.07.2001
(51) Int. Cl.: B65D 88/12, B60P 3/42

(54) **Transportbehälter für lose und verpackte Ware**

(30) Priorität: 12.07.2000 DE 20012086 U
(71) Anmelder: Ah Kee Clausen-Hoormann, 21502 Geesthacht (DE)
(72) Erfinder: Clausen-Hoormann, Ah Kee, 21502 Geesthacht (DE)
(74) Vertreter: DIEHL GLAESER HILTL & PARTNER

(57) **Zusammenfassung**

In Form eines Transportcontainers ausgebildeter Behälter für den Transport loser und verpackter Ware auf Paletten. Der Behälter ist in Querrichtung in mindestens zwei zueinander absperrbarer verfahrbare Segmente (40, 41) unterteilt. In einem der Segmente (41) ist der Boden in Längsrichtung geteilt ausgebildet. Die nebeneinander liegenden Ladeflächen können voneinander wegbewegt einen Spalt für den Auslaß des Schüttgutes bilden (Fig. 2).

## Beschreibung

Die Erfindung bezieht sich auf einen im wesentlichen in Form eines Transportcontainers ausgebildeten Behälter für den Transport loser Ware und verpackter Ware auf Paletten, aufweisend Hecktüren, Eckbeschläge und ein zu öffnendes Dach.

Die vorliegende Erfindung bezieht sich insbesondere auch auf solche Schüttgüter, die ein relativ geringes spezifisches Gewicht bei relativ großem Volumen haben, und es geht darum, derartige Schüttgüter sowohl rentabel zu Be- als auch zu Entladen.

Der Transport von Gütern in fein- bis grobkörnigen Aggregatsformen für die weiterproduzierende Industrie, wie z.B. Putz- und Mörtelwerke, Beton- und Steinindustrie wird im wesentlichen durch drei Lieferformen geprägt:
lose Ware, die abgekippt oder abgeladen wird,
lose Ware, die ausgeblasen werden muß, und verpackte Ware auf Paletten.

Ein häufiges logistisches Problem stellt sich ein, wenn
a) Kunden nur kleinere Mengen benötigen,
b) Kunden mehrere Produkte in jeweils kleineren Mengen benötigen und
c) bei Kunden kombinierte Ladungen von verpackter und loser Ware benötigt werden, wobei die lose Ware darüber hinaus in ein Vorratssilo zu blasen ist.

Der Spediteur ist aus Rentabilitätsgründen auf solche Rücktouren angewiesen, die den gleichen Fahrzeugtyp erfordern, wodurch häufig seine Möglichkeiten, Rückladungen zu finden, eingeschränkt werden. Es müssen also in der Regel drei verschiedene Fahrzeugtypen vorgehalten werden.

Ziel der Erfindung ist nun, eine Transporteinheit zu schaffen, die alle drei vorgenannten Lieferformen sowie Kombinationen hieraus in einer Tour ermöglicht darüber auch zwei beliebig miteinander kombinierbare Transportarten realisieren kann.

Die prägenden Merkmale des Transportbehälters gemäß der Erfindung sind:
1. Der Fahrzeugboden ist in Längsrichtung mittig geteilt.
2. Der Fahrzeugboden ist in Querrichtung in mindestens 2 oder sogar mehr Segmente unterteilt, wobei die Segmentböden einzeln oder auch mehrere zugleich seitlich hydraulisch angehoben werden können, so daß in diesen Abschnitten das Schüttgut durch den entstehenden Spalt auf ein über die gesamte Längsrichtung führendes, nach unten eingekapseltes Förderband herausfallen kann.
3. Die Transporteinheit besitzt am Heck ein Gebläseaggregat, das bei Bedarf direkt von dem unteren Transportband beschickt werden kann.
4. Der Transportbehälter weist ein verfahrbares Querschott auf, das über an beiden Seiten der oberen Längsholme verlaufende Zahnradantriebe/Schneckengetriebe oder andere geeignete Antriebe auf jeden Punkt der Quersegmentsgrenzen gefahren werden kann und am Fahrzeugboden mit Klappbolzen o.ä. arretiert wird.

Bei Transport von loser Ware kann diese mittels Transportband nun entweder direkt lose in einen bodennahen Einfülltrichter mit Förderschnecke oder Elevator eingefüllt werden, oder durch Zwischenschalten des Gebläseaggregates pneumatisch in einen Vorratssilo befördert werden.

Ebenso ist es nun möglich, in dem hinteren, variablen Laderaum durch die Hecktür Paletten zu laden, während im vorderen Abschnitt von oben durch die bereits erwähnte fahrbare, bzw. abnehmbare Decke loses Schüttgut eingefüllt werden kann, das wiederum unabhängig der hinteren Paletten lose oder ausgeblasen entladen werden kann. Ebenso kann eine Abschottung zwischen zwei lose geschütteten Produkten ebenfalls mit verschiedenen Abladeformen erfolgen.

Erreicht wird dies durch die in den Ansprüchen angegebenen Merkmale.

Im Prinzip besteht der Behälter gemäß der Erfindung aus einem Kasten, dessen Fahrzeugboden in der Mitte geteilt ist und der in der bevorzugten Ausführungsform an den beiden Aufbauseiten hydraulisch angehoben wird, so daß die Ladung, die sich zuvor auf der Ladefläche befunden hat, über die schräg gestellten beiden Ladeflächenteile nach unten heraus aus dem Schüttgutbehälter herausfallen kann. Ein derartiger Schüttgutbehälter kann zum Beispiel für Sattelauflieger, Wechselpritschen, Anhänger, Zugmaschinen und Eisenbahnwaggons verwendet werden und in der bevorzugten Ausführungsform wird er so transportiert, wie ein handelsüblicher Container.

Weiterhin ist wesentlich für den Behälter die Quereinteilung in Segmente, in denen unterschiedliche Ware transportiert werden soll.

Aufgrund der Entladung nach unten hin kann das gesamte zur Verfügung stehende Ladevolumen mit dem Schüttgut von oben her ausgefüllt werden, wobei der Entladevorgang keinerlei Probleme aufwirft. Im Vergleich zu einem sonstigen Container erhöht sich das Gewicht des Containers nur unwesentlich, wohingegen gegenüber herkömmlichen Kippsilofahrzeugen die geringere Investition und die höhere Transportmenge positiv zu werden sind.

Die Erfindung wird nachstehend anhand der Zeichnung beispielsweise erläutert.

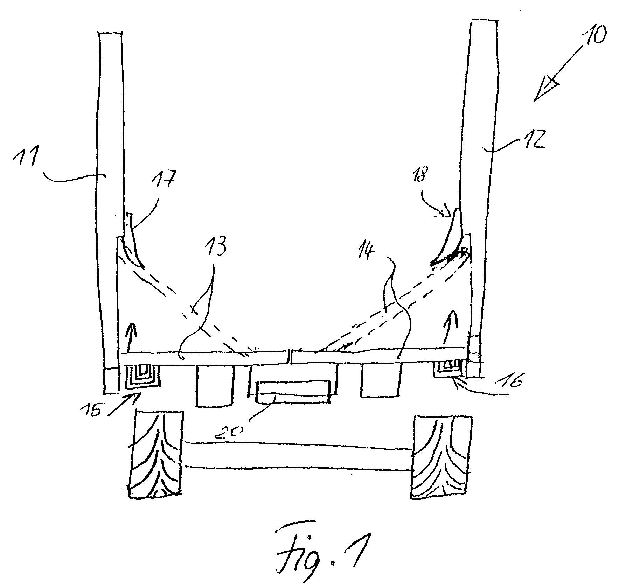

- Fig. 1: zeigt eine Querschnittsansicht durch einen Behälter gemäß der Erfindung.

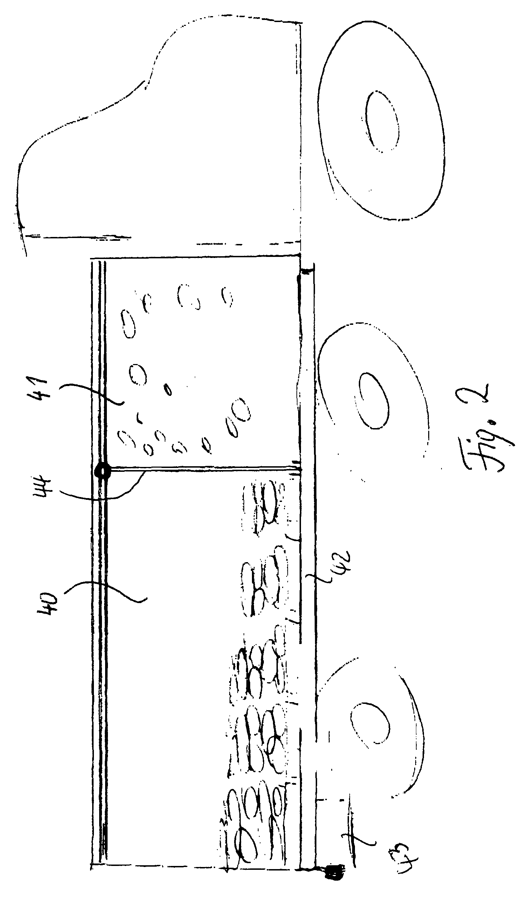

- Fig. 2: zeigt eine Längsschnittansicht durch einen Behälter gemäß der Erfindung.

Der Behälter 10 ist in der Zeichnung schematisch wiedergegeben und ebenfalls nur schematisch ist das Fahrgestell mit den Reifen angegeben. Es ist jedoch zu erkennen, daß die beiden Längsseiten 11 und 12 des Schüttgutbehälters im unteren Bereich über einen zweigeteilten Fahrzeugboden mit zwei Ladeflächenteilen 13 und 14 ausgebildet ist. In der gezeigten Ausführungsform ist der Schüttgutbehälter nach oben offen gezeigt.

In der gezeigten Ausführungsform kann der Innenraum des Behälters 10 von oben her gefüllt werden und die nebeneinander liegenden Ladeflächenteile 13 und 14 schließen den Behälter nach unten hin dicht ab.

Soll der Schüttgutbehälter 10 gemäß der Erfindung entleert werden, so werden über Hydraulikeinrichtungen 15 und 16 Schwenkbewegungen auf die Ladeflächenteile 13 und 14 um horizontale Achsen ausgeübt, so daß die beiden Ladeflächenteile 13 und 14 in die strichliert gezeichneten Lagen übergehen. Dadurch entsteht zwischen den beiden Ladeflächenteilen 13 und 14 ein nach unten offener Spalt, so daß sich das Schüttgut nach unten hin auf ein Förderband 20 entladen kann. Das Förderband 20 transportiert das Schüttgut zu einer nicht gezeigten Pumpe oder einem Gebläse, die ihrerseits das entladene Material unter Druck in einen nicht gezeigten Silobehälter transportieren kann.

Mit 17 und 18 sind Längsdichtlippen aus Gummi gezeigt, die an den äußeren Kanten der Ladeflächenteile 13 und 14 angebracht sind und an der Innenwandung des Aufbaus 11 und 12 anliegen, so daß das Schüttgutmaterial in diesem Bereich nicht nach außen gelangen kann.

Das Fahrzeug ist in Querrichtung in zwei Segmente 40 und 41 unterteilt, wobei die Trennung über eine verfahrbare Schottwand 44 bewerkstelligt wird. Im Segment 40 kann Palettenware transportiert werden, während im Bereich 41 irgendein loses Schüttgut transportiert wird. Unterhalb des Bodens befindet sich eine Fördereinrichtung 42 in Form eines Förderbandes. Mit 43 ist ein Gebläse bezeichnet.

## Patentansprüche

1. Im wesentlichen in Form eines Transportcontainers ausgebildeter Behälter für den Transport loser Ware und verpackter Ware auf Paletten, aufweisend Hecktüren, Eckbeschläge und ein zu öffnendes Dach, **dadurch gekennzeichnet, daß** der Behälter in Querrichtung in mindestens zwei zueinander absperrbarer verfahrbare Segmente (40, 41) unterteilt ist; in einem der Segmente (41) der Boden in Längsrichtung geteilt ausgebildet ist und aus zwei Ladeflächenteilen besteht, die nebeneinander liegend eine durchgehende Ladefläche und voneinander wegbewegt einen Spalt für den Auslaß des Schüttgutes bilden und daß unter dem Boden eine Fördereinrichtung (42) für lose Ware angeordnet ist.

2. Schüttgutbehälter nach Anspruch 1, **dadurch gekennzeichnet, daß** die Ladeflächenteile (13, 14) um horizontale Längsachsen verschwenkbar und vollständig im Inneren des Behälters angeordnet sind.

3. Schüttgutbehälter nach Anspruch 1 oder 2, **gekennzeichnet durch** Dichtlippen an den Ladeflächenteilen in den Bereichen an den Innenwandungen des Behälters.

4. Schüttgutbehälter nach Anspruch 1 bis 3, **dadurch gekennzeichnet, daß** die Ladeflächenteile hydraulisch oder pneumatisch betätigbar sind.

5. Schüttgutbehälter nach Anspruch 1 bis 4, **dadurch gekennzeichnet, daß** das Fahrzeugdach aus einer aufschiebbaren Schiebeplane gebildet ist.

6. Schüttgutbehälter nach Anspruch 1 bis 5, **dadurch gekennzeichnet, daß** die Fördereinrichtung (42) mit einem Gebläse (43) ausgestattet ist.
